# EUROPÄISCHE PATENTSCHRIFT

(11) **EP 1 198 688 B1**
(45) Veröffentlichungstag und Bekanntmachung des Hinweises auf die Patenterteilung: **03.03.2004**
(21) Anmeldenummer: 99941469.1
(22) Anmeldetag: 27.07.1999
(51) Int. Cl.: F24J 2/00

(54) **TRANSPARENTE WÄRMEDÄMMUNG**
TRANSPARENT THERMAL INSULATION DEVICE
DISPOSITIF D'ISOLATION THERMIQUE TRANSPARENT

(43) Veröffentlichungstag der Anmeldung: 24.04.2002
(73) Patentinhaber: GLASWERKE ARNOLD GmbH & Co. KG, 73626 Remshalden (DE)
(72) Erfinder: SCHMIDT, Christoph, 91720 Gunzenhausen (DE)
(74) Vertreter: Fuhlendorf, Jörn, Dipl.-Ing.
(86) Internationale Anmeldenummer: PCT/EP1999/005380
(87) Internationale Veröffentlichungsnummer: WO 2001/007845

(56) Entgegenhaltungen:
- WO-A-95/10740
- CH-A- 687 549
- DE-C- 19 642 511
- DE-U- 9 306 519
- DE-U- 9 307 307

## Beschreibung

Die vorliegende Erfindung betrifft eine transparente Wärmedämmungsvorrichtung zur solaren Beheizung von Gebäuden nach dem Oberbegriff des Anspruchs 1.

Während durch herkömmliche opake Gebäudewärmedämmung auf einer Außenwand die Wärmeverluste aus einem Gebäude nur reduziert werden, können transparent wärmedämmende Systeme die Sonnenenergie zur Gebäudeheizung nutzen und über die Heizperiode einen Nettowärmegewinn liefern. Unter dem Begriff "Transparente Wärmedämmung (TWD)" versteht man Materialien, die einerseits wärmedämmende Eigenschaften besitzen und gleichzeitig für Sonnenstrahlung durchlässig sind. Dabei gelangt Sonnenstrahlung durch das System auf die Außenwand, wird dort in Wärme umgewandelt und durch die Wand hindurch in den Raum dahinter geleitet. Nur ein kleiner Teil der Wärme fliesst wieder nach außen ab. Zur Umwandlung der Sonnenstrahlung in Wärme wird üblicherweise auf der massiven Außenwand eine strahlungsabsorbierende Schicht als Putz oder Farbe aufgebracht.

Ein von J. Geisler in der Zeitschrift Sonnenenergie, 4/95 (Verlag Solar Promotion GmbH) beschriebenes TWD-Element besteht aus einem mit Trockenmittel gefüllten Rahmen, in den sehr dünnwandige Glasröhrchen gefüllt werden. Die Glasröhrchen sind in einem isolierglasähnlichen Verbund zwischen zwei hochtransparenten Glasscheiben fixiert. Diese Struktur erlaubt einen hohen Solarenergiedurchlass der einfallenden Sonnenenergie und gleichzeitig eine hohe Wärmedämmung der in der Außenwand aufgespeicherten Wärme. Durch die Anwesenheit von Trockenmittel in dem Isolierglasrandverbund sowie die Eigenschaft der Glasröhrchen, keinerlei Feuchtigkeit aufzunehmen, wird die Funktion des Elements nicht im Laufe der Zeit durch Kondensation im Inneren dieses Elementes beeinträchtigt.

Bei dieser bekannten Konstruktion ist ein Gaszwischenraum zwischen dem TWD-Element und der Absorberschicht auf der Außenwand des Gebäudes vorgesehen. Dieser Zwischenraum steht im Gasaustausch mit der Umgebung und ist deshalb immer mit Luft gefüllt. Er kann auch der Hinterlüftung dienen, wenn gar keine oder nur eine verminderte Heizwirkung erwünscht wird. In diesem Luftzwischenraum, und insbesondere auf der Absorberschicht, kann sich allerdings Kondensat bei Temperaturschwankungen niederschlagen. Es kann auch Staub sich auf der Absorberschicht niederschlagen und dadurch die licht- bzw. solarabsorbierenden sowie die Infrarot-reflektierenden Eigenschaften dieser Schicht im Laufe der Zeit beeinträchtigen. Diese Schicht muss daher für solche Einflüsse unempfindlich sein und sich gleichzeitig auch auf mehrere Untergründe (Mauerwerk, Putz) bauseits auftragen lassen. Üblicherweise werden deshalb dunkle Putze oder Anstriche verwendet, die aber bei guten Absorptionskoeffiziente (α bis 95%) relativ hohe Emissionskoeffiziente (≥ 50%) aufweisen.

Eine transparente Wärmedämmungsvorrichtung der eingangs genannten Art beschreibt die DE 196 42 511 C1, aus der eine Zweischeibenisolierverglasung in einem Aluminiumrahmen bekannt ist. Dabei ist eine schwarzen Absorberfolie auf der gegen dan Zwischenraum zwischen den zwei Scheiben gerichteten Fläche der inneren Glasscheibe aufgebracht und die Isolierverglasung mittels eines Mörtels und einer Silikonschicht ohne Luftzwischenraum auf der Außenwand befestigt.

Nachteilig bei dieser Konstruktion ist das Vorsehen einer zusätzlichen Glasscheibe und das Beschichten dieser Glasscheibe mit dem folienartigen Absorber. Dies ist zeitund kostenaufwendig. Außerdem erfordert das Aufbringen solch einer TWD-Vorrichtung auf einer Außenwand einen ziemlich aufwendigen und heiklen Arbeitsgang, mit der Folge, dass die einmal befestigte TWD-Vorrichtung nicht mehr ohne Zerstörung von der Wand abgenommen werden kann.

Es ist die Aufgabe der Erfindung, eine TWD-Vorrichtung anzubieten, die die Nachteile dieser vorbekannten Systeme nicht aufweist und die insbesondere im Standardarbeitsgang auf- und abmontierbar ist.

Zur Lösung dieser Aufgabe sind bei einer Vorrichtung der genannten Art die im Anspruch 1 angegebenen Merkmale vorgesehen.

Vorteilhafte Weiterbildungen ergeben sich aus den Merkmalen eines oder mehrerer der Unteransprüche.

Die erfindungsgemäße Vorrichtung weist einen Randverbund in Isolierglastechnik zwischen einer Glasscheibe und einer inneren eigensteifen bzw. -stabilen Absorberplatte auf. Das heißt, dass die Glasscheibe und die Absorberplatte mittels eines trockenmittelhaltigen Abstandshalters zusammengehalten bzw. zusammengeklebt sind und dass in dem Zwischenraum zwischen beiden keine Kondensation entstehen kann. Es kann ferner kein Staub oder keine sonstige Verschmutzung ins Innere auf die absorbierende Fläche der Absorberplatte gelangen. Da die Absorberschicht hermetisch abgeschlossen und damit vor Witterung und Verschmutzung geschützt ist, können sehr leistungsfähige, aber auch entsprechend empfindliche Schichten verwendet werden. Die Montage von eigenstabilem Absorber und Glasscheibe ist sehr einfach und zeitsparend.

Gemäß einer bevorzugten Weiterbildung der erfindungsgemäßen Wärmedämmungsplatte wird nach außen hin eine weitere Glasscheibe angeordnet, wobei diese weitere Scheibe mit der ersten ebenfalls über einen Randverbund in Isolierglastechnik zusammengehalten wird. Durch die Anwesenheit von Trockenmittel im äußeren Randverbund ist wiederum gewährleistet, dass auch im äußeren Zwischenraum keine Feuchtigkeitskondensation stattfinden kann.

Der Zwischenraum zwischen der äußeren und der mittleren Glasscheibe kann mit nebeneinander aufgeschichteten Glasröhrchen, Waben- bzw. Röhrchenstrukturen aus Kunststoff aber auch Aerogel oder anderen Materialien zum Zweck der Konvektionsunterdrückung und Infrarot-Strahlungsdämpfung gefüllt werden, wobei vorzugsweise neben den Waben bzw. Röhrchen, in dem Zwischenraum, ein Luftspalt übrig bleibt. Der Zwischenraum zwischen der äußeren und der mittigen Glasscheibe kann ebenfalls mit einem Edelgas gefüllt werden, z. B. mit Krypton.

Weitere Einzelheiten der Erfindung sind der folgenden Beschreibung zu entnehmen, in der die Erfindung anhand der in der Zeichnung dargestellten Ausführungsbeispiele näher beschrieben und erläutert wird. Es zeigen:
- Figur 1: einen schematischen Querschnitt einer ersten Ausführungsform;
- Figur 2: einen schematischen Querschnitt einer zweiten Ausführungsform, jedoch ohne Gebäudewand,
- Figur 3: einen schematischen Querschnitt einer dritten Ausführungsform ebenfalls ohne Gebäudewand und
- Figur 4: einen schematischen Querschnitt einer vierten Ausführungsform.

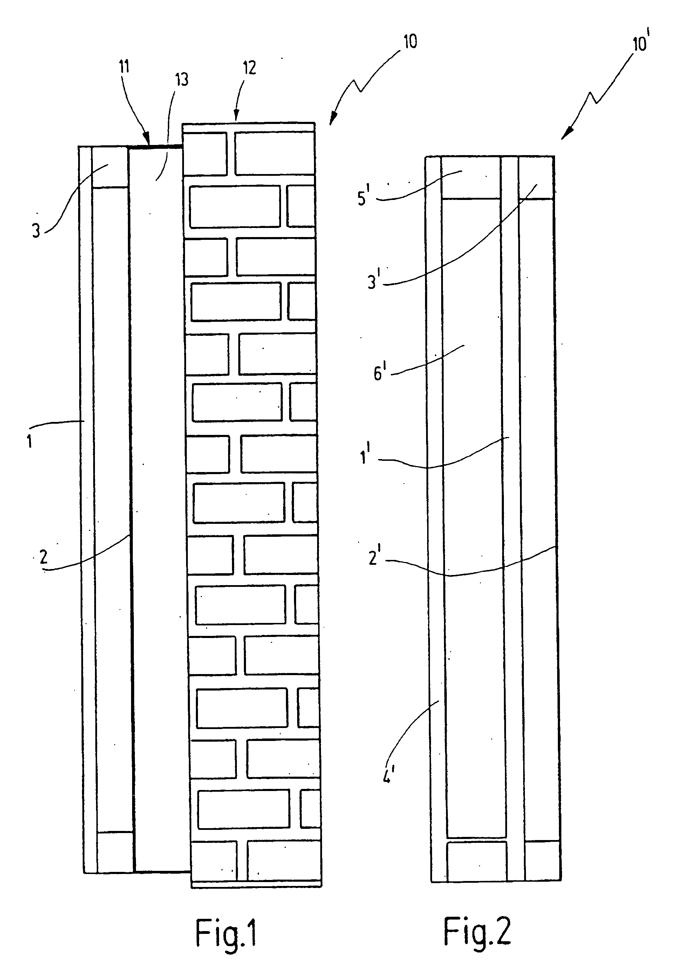

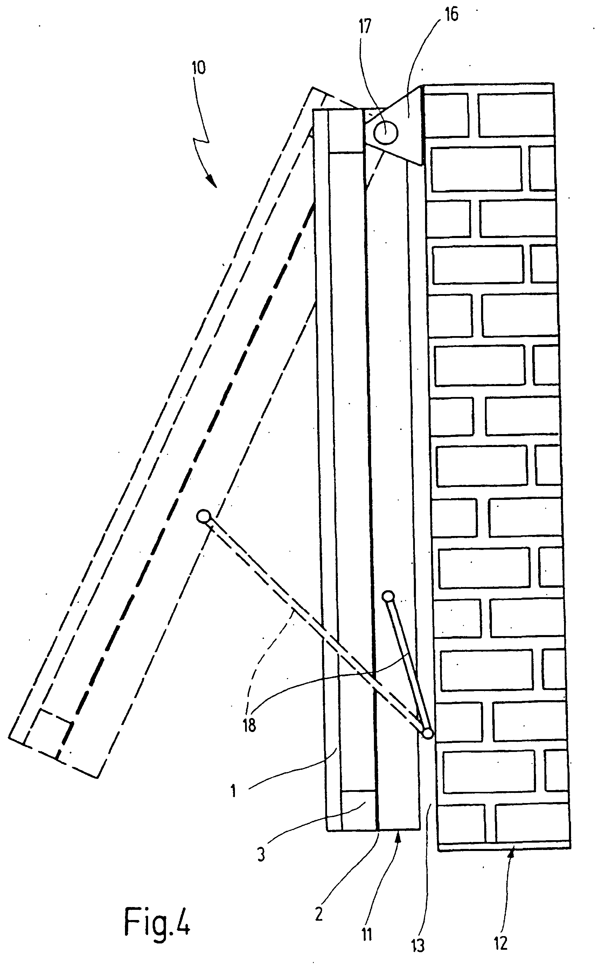

Figur 1 zeigt eine transparente Wärmedämmungsvorrichtung, im folgenden als TWD-Element 10 bezeichnet, die bzw. das eine Glasplatte 1 aus z.B. 5 mm dickem Einscheibensicherheitsglas (ESG) aufweist. Die Scheibe 1 bildet die Außenseite des TWD-Elemewts 10. Die der Gebäudewand gegenüber liegende Innenseite des TWD-Elements 10 wird durch eine eigensteife Absorberplatte 2 gebildet, die, in der in Figur 1 gezeigten Ausführungsform, aus einem Absorberblech besteht. Der Randverbund 3 zwischen der Glasscheibe 1 und dem Absorberblech 2 bildet einen Abstandshalter, der wie aus der Isolierglastechnik bekannt, mit Trockenmittel gefüllt ist. Der Abstand zwischen der Glasscheibe 1 und dem Absorberblech 2 beträgt je nach Gasfüllung allgemein 5 - 20 mm, bei Krypton typischerweise 11 mm. Das TWD-Element 10 ist mit einem rückseitigen bspw. umlaufenden Haltewinkel 11 versehen, der auf die unverputzte Massivwand 12 unter Beibehaltung eines Hihterlüftungszwischenraümes 13, montiert wird. Das TWD-Element 10 hat ein Gewicht von ca. 10 kg pro m². Dieses geringe Gewicht erlaubt es, aufklappbare Rahmen bekannter Bauart zu verwenden, so dass sich die Möglichkeit des Überhitzungsschutzes z.B. durch thermostatisch geregeltes Abklappen einzelner (nicht unbedingt aller) Elemente von der Massivwand 12 bietet (vgl. Figur 4). Geeignete, thermostatisch selbstregelnde Vorrichtungen werden z. B. zur automatischen Belüftung von Gewächshäusern eingesetzt.

Gemäß Figur 2 weist das TWD-Element 10' einer anderen Ausführungsform eine Glasscheibe 1' und ein eigensteifes Absorberblech 2' auf, welche durch einen Abstandhalter 3' in Abstand gehalten werden. Der z.B. 11 mm breite Zwischenraum ist wiederum z.B. mit Krypton gefüllt. Nach außen hin, d.h. vor der ersten Scheibe 1' befindet sich eine zweite Glasscheibe 4' aus z.B. 5 mm dickem ESG, die in einem Abstand von 8 - 20 mm von der ersten Glasscheibe 1' durch einen, auch in der Isolierglastechnik verwendeten, mit Trockenmittel gefülltem Abstandhalter 5' getrennt ist. Der Zwischenraum 6' zwischen der ersten und der äußeren Scheibe 4' ist wiederum bevorzugt mit Edelgas z.B. Krypton gefüllt. Die Außenseite der mittleren Scheibe 1' kann eine emissionsverringerende Beschichtung tragen.

Gemäß einer in der Figur 2 nicht gezeigten Ausführungsvariante dieser Weiterbildung kann der äußere Zwischenraum 6' auch zusätzlich eine Aerogelfüllung enthalten oder mit anderen konvektionsunterdrückenden Strukturen, wie Röhrchenpackungen aus Kunststoff, bestückt sein. Außer kann gemäß einer weiteren Variante statt der Glasscheibe 1' eine transparente mit Aerogel gefüllte Platte in Form einer sogenannten Stegdoppelplatte vorgesehen sein.

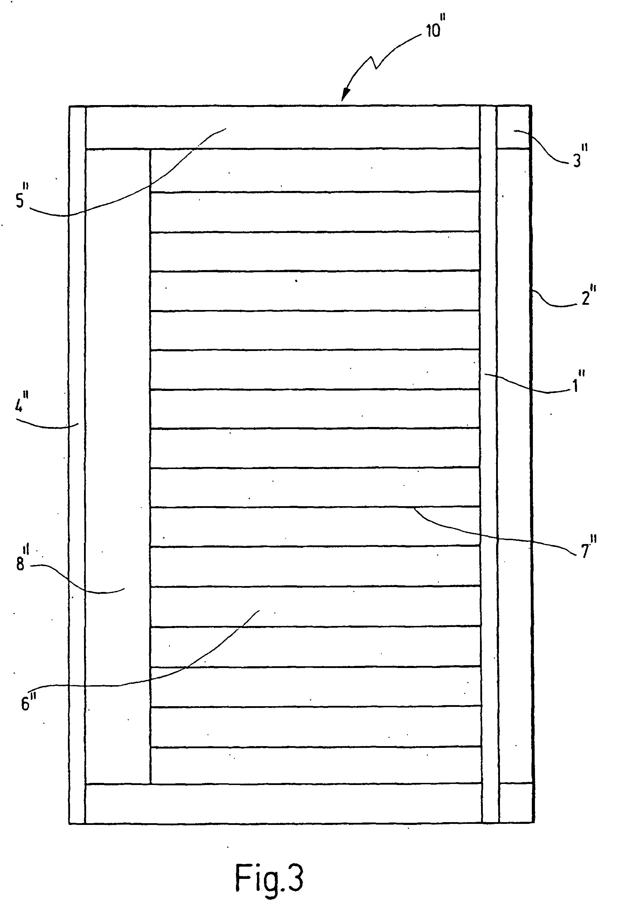

Gemäß einer weiteren Ausführungsform des erfindungsgemäßen TWD-Elementes 10", welche in Figur 3 in schematischem Querschnitt dargestellt ist, wird ebenfalls ein Randverbund 3'', 5'' in Isolierglastechnik mit einem äußeren Einscheibensicherheitsglas 4'', einem mittigen Einscheibensicherheitsglas 1'' und einer inneren eigensteifen Absorberplatte 2'' hergestellt. Der Zwischenraum 6'' zwischen der äußeren und der mittigen Glasscheibe ist ca. 95 mm breit. Dieser Zwischenraum enthält eine Glasröhrchenpackung 7''. Die Glasröhrchen 9" sind sehr dünnwandige Glasröhrchen mit einer Länge von etwa 80 mm und einem Durchmesser von 10 mm. Es können auch die Röhrchen 9" mit beliebiger anderer Länge Verwendung finden. Entsprechend verändert sich auch der Zwischenraum 6''. Die optischen Eigenschaften der Glasröhrchen 9" lassen mehr als 80 % der einfallenden Lichtsonnenenergie bis zur Absorberplatte 2" durch. Neben den Glasröhrchen 9" wird noch im selben Zwischenraum ein ca. 15 mm breiter Luftspalt 8'' freigelassen. Die Verwendung von Glasröhrchen 9" ist besonders vorteilhaft, weil sie kein Wasser aufnehmen können, statisch eigentragfähig, geometrisch genau in der Konstruktion, temperatur- und UV-beständig und nicht brennbar sind.

Bei dem in Figur 4 dargestellten Ausführungsbeispiel ist das TWD-Element 10 gemäß Figur 1 vor der Massivwand 12 abklappbar angeordnet. Hierzu ist am oberen Ende oder einem oberen Bereich der Massivwand 12 ein senkrecht abstehender Halter 16 angebracht, an dem das obere Ende des senkrechten Teils des rückseitigen Haltewinkels 11 über eine Schwenkachse 17 gehalten ist. Zum automatischen oder halbautomatischen Abschwenken des TWD-Elementes 10 von der Massivwand 12 ist ein Hubzylinder 18 vorgesehen, der einenends an einem entsprechenden Bereich des Haltewinkels 11 angelenkt ist und der sich andernends an der Massivwand 12 in nicht im Einzelnen dargestellter Weise schwenkend bewegbar abstützt. Figur 4 zeigt sowohl die eingefahrene Parallelendstellung als auch die abgeschwenkte Endstellung, wobei beliebige Zwischenschwenkstellungen möglich sind.

Es versteht sich, dass entsprechend Figur 4 das TWD-Element 10 statt untenseitiger auch obenseitig abschwenkbar angeordnet sein kann. Es versteht sich ferner, dass auch das TWD-Element 10' und/oder TWD-Element 10" in in der Figur 4 dargestellten Weise von einer Wand 12 abschwenkbar angeordnet sein kann.

Die erfindungsgemäßen Eigenschaften der vier oben beschriebenen Ausführungsformen 10, 10' und 10" sind in der Tafel 1 zusammengefasst.

**Tafel 1**

| Ausführungsform | 1 | 2 | 3 |
|---|---|---|---|
| Zwischenräume | 1 x Edelgas | 1 x Edelgas 5-20 mm + 1 x Edelgas 5 - 20 mm | 1 x Edelgas 5-20 mm + 1 x Glasröhrchen 80 mm |
| g-Wert (DIN 67507) | ca. 90 % | ca. 80 % | ca. 80 % |
| k-Wert | 0,7- 1,2 W/m² K | 0,7-1,2 W/m² K | 0,6 - 0,7 W/m² K |
| **Edelgase: Argon, Krypton oder Xenon** | | | |

Anstelle einer Edelgasfüllung ist auch Luftfüllung möglich. In diesem Fall kann der betreffende Zwischenraum mit einem Druckausgleich bekannter Bauart zur Außenluft versehen werden.

Die in Figur 1 gezeigte Ausführungsform weist, bei niedrigen Konstruktionskosten und vermindertem Gewicht immer noch k-Werte von 0,7 bis 1,0 Watt/m² K auf. Die in den Figuren 2 und 3 gezeigten Ausführungsformen bringen eine deutliche Verbesserung des k-Wertes. Dabei ist die Gesamtstärke des TWD-Elementes 10' der Figur 2 praktisch die Hälfte derjenigen eines vorbekannten TWD-Elementes. Insbesondere aber ≤ 50 mm, d.h. ein solches Element läßt sich noch in handelsübliche Rahmenkonstruktionen integrieren. Die Gesamtstärke des TWD-Elementes 10" der Figur 3 ist nur geringfügig größer als diejenige eines vorbekannten TWD-Elementes (ca. 110 mm anstatt ca. 100 mm).

Alle vorhergehend beschriebenen Ausführungsformen erbringen folgende Vorteile:

Der Absorber ist hermetisch abgeschlossen und damit vor Witterung und Verschmutzung geschützt, so dass auch sehr leistungsfähige absorbierende Schichten verwendet werden können. Die selektiven Eigenschaften des Absorbers bleiben auf Dauer erhalten. Das gleiche gilt für seine Absorbtionseigenschaften im Bereich der Solarstrahlung. Farbliche Gestaltung der selektiven Schicht nach außen hin ist ebenfalls möglich.

Der Absorber ist im TWD-Alement 10, 10', 10'' integriert. Daher kann ein höherer Vorfertigungsgrad erreicht werden und das TWD-Element 10, 10', 10" kann auf die rohe unverputzte Gebäudewand 12 montiert werden: auf der Baustelle entfällt der Arbeitsgang Verputzen bzw. Anstreichen.

Das TWD-Element 10, 10', 10" kann ohne Verschmutzungsgefahr und damit Transmissionsminderung, z. B. zu Kühlzwecken im Sommer, hinterlüftet werden.

Die Wärmeübertragung vom Absorberblech 2, 2', 2" zur dahinter liegenden massiven Wand 12 erfolgt nicht mehr durch Wärmeleitung wie das der Fall ist, wenn der Absorberputz oder die Absorberbeschichtung in Kontakt mit der Massivwand ist, sondern durch Strahlung, Gaskonvektion und Gasleitung. Dabei lässt sich die Wärmeübertragung durch eine rückseitige Beschichtung zur Ausgestaltung des Absorberbleches bzw. der Absorberglasscheibe zwischen ca. 2 bis 8 Watt/m² K beliebig auswählen. Verwendet man beispielsweise ein Absorberblech aus Kupfer, dann beträgt die Wärmeübertragung vom Absorber zur Wand 2 Watt/m² K bei einer Rückseite aus blankem Kupfer bis zu 8 Watt/m² K bei lackiertem Kupfer. Bei blankem Glas als Rückseite beträgt der Wärmeübergang 8 Watt/m² K.

Es versteht sich, dass die dem Überhitzungsschutz dienenda Hinterlüftung auch zur Raumheizung genutzt werden kann.

Gemäß nicht dargestellten Ausführungsbeispielen kann die Absorberplatte 2, 2' bzw. 2'' mit wasserdurchströmten Rohren zur Bildung eines Fassadenkollektors bzw. Absorbers versehen sein. Außerdem kann die vordere, d.h. außenseitige Glasabdeckung als Prismenscheibe ausgebildet oder mit einer solchen versehen sein, um einen saisonalen Überhitzungsschutz zu erreichen.

In nicht weiter dargestellter Weise kann der Luftzwischenraum zwischen Absorber und transparenter Abdeckung auch größer als 20 mm sein. Insbesondere bei dem Aufbau gemäß Fig. 1 kann er z. B. 2 x 20 mm = 40 mm betragen. In diesem Fall kann zum Überhitzungsschutz in den SZR eine Lamellenjalousie eingebaut werden, deren Lamellen z. B. aus hochglanzpoliertem Aluminium bestehen und die so zu verstellen sind, dass sie einerseits durch ihre lichtreflektierenden Eigenschaften die Sonnenenergie optimal auf den Absorber lenken und andererseits im Nachtfall ganz geschlossen werden können. In diesem Fall wirken sie als IR-Reflektoren, so dass sich der k-Wert des Aufbaus entsprechend reduziert.

Die Glasröhrchen können im Schnitt vorteilhaft ring- bzw. kreisförmig oder wabenförmig sein oder eine sonstige Form aufweisen. Statt Glas kann für die Röhrchen auch ein geeigneter Kunststoff verwendet werden.

Alle Ausführungsvarianten können anstelle der Montage vor einer Massivwand mit dazwischenliegendem Luftspalt auch mit einer rückwärtigen Wärmedämmung (z. B. aus PU-Schaum) versehen und als Paneel in eine entsprechende Fassadenkonstruktion eingebaut werden. In diesem Fall wird die Wärmedämmung direkt rückwärtig auf das Absorberblech aufgebracht.

## Patentansprüche

1. Transparente Wärmedämmungsvorrichtung (10) zur solaren Beheizung von Gebäuden, mit einer Glasscheibe (1) und einem über einen Randverbund (3) in Isolierglastechnik und über einen mit Edelgas gefüllten Zwischenraum im Abstand dazu angeordneten Absorber (2), **dadurch gekennzeichnet, dass** der Absorber aus einer eigensteifen inneren metallischen Absorberplatte (2, 2', 2'') besteht, die unmittelbar am Randverbund (3, 3', 3'') zusammengehalten ist, und dass zwischen der Absorberplatte (2, 2', 2") und einer Gebäudewand (12) ein Luftzwischenraum (13) angeordnet ist.

2. Vorrichtung nach Anspruch 1, **dadurch gekennzeichnet, dass** die Absorberplatte (2, 2', 2'') aus einem, auf der Seite zum Zwischenraum lichtabsorbierend beschichteten Absorberblech besteht.

3. Vorrichtung nach Anspruch 1 oder 2, **dadurch gekennzeichnet, dass** vor der (ersten) Glasscheibe (1', 1''), nach außen hin, eine zweite Glasscheibe (4', 4'') angeordnet ist und dass die erste und die zweite Glasscheibe über einen zweiten Randverbund (5', 5'') in Isolierglastechnik zusammengehalten sind.

4. Vorrichtung nach Anspruch 3, **dadurch gekennzeichnet, dass** der Zwischenraum (6') zwischen erster (1') und zweiter (4') Glasscheibe mit einem Edelgas gefüllt ist.

5. Vorrichtung nach Anspruch 4, **dadurch gekennzeichnet, dass** die erste Glasscheibe (1') beschichtet ist.

6. Vorrichtung nach Anspruch 3, **dadurch gekennzeichnet, dass** der Zwischenraum (6'') zwischen erster (1'') und zweiter Glasscheibe (4'') mit aufgeschichteten horizontal angeordneten Röhrchen (7'') aus Glas oder Kunststoff gefüllt ist.

7. Vorrichtung nach Anspruch 6, **dadurch gekennzeichnet, dass** der Zwischenraum (6'') zwischen erster (1'') und zweiter Glasscheibe (4'') neben den Röhrchen (7'') einen Luftspalt (8'') aufweist.

8. Vorrichtung nach Anspruch 6 oder 7, **dadurch gekennzeichnet, dass** die Röhrchen (7'') im Querschnitt kreis- oder wabenförmig sind.

9. Vorrichtung nach einem der vorhergehenden Ansprüche, **dadurch gekennzeichnet, dass** die gegen die Gebäudewand (12) gerichtete Seite der Absorberplatte (2, 2', 2'') eine Schicht zur Einstellung der Wärmeübertragung aufweist.

10. Vorrichtung nach einem der vorhergehenden Ansprüche, **dadurch gekennzeichnet, dass** die Absorberplatte (2, 2', 2"), die Glasscheibe (n) (1, 1', 1''; 4', 4") und der oder die Randverbunde (3, 3', 3''; 5', 5") in einem Rahmen oder an einem rückwärtigen Haltewinkel (11) gehalten und mit der Gebäudemauer (12) nur über diesen Rahmen bzw. Haltewinkel (11) verbunden sind.

11. Vorrichtung nach Anspruch 10, **dadurch gekennzeichnet, dass** sie an der Gebäudemauer (12) abklappbar gehalten ist.

12. Vorrichtung nach einem der vorhergehenden Ansprüche, **dadurch gekennzeichnet, dass** die Absorberplatte (2, 2', 2") mit vorzugsweise wasserdurchströmten Rohren versehen ist.

13. Vorrichtung nach einem der vorhergehenden Ansprüchen, **dadurch gekennzeichnet, dass** die äußere Glasabdeckung (1, 4', 4") mit einer Prismenscheibe versehen oder durch eine solche ersetzt ist.

14. Vorrichtung nach einem der vorhergehenden Ansprüche, **dadurch gekennzeichnet, dass** die Absorberplatte (2, 2', 2'') rückseitig mit einer Wärmedämmung versehen und das so entstehende Paneel als Wandelement (ohne Massivwand) eingesetzt ist.

15. Vorrichtung nach einem der vorhergehenden Ansprüche, **dadurch gekennzeichnet, dass** eine Lamellenjalousie oder ein Rollo zwischen Absorberplatte (2, 2', 2") und Glasscheibe (1, 1', 1") angeordnet ist.

## Claims

1. Transparent thermal insulation device (10) for solar heating of buildings, having a glass pane (1) and an absorber (2) arranged at a separation therefrom via an edge bond (3) using insulating glass technology and via an intermediate space filled with a noble gas, **characterised in that** the absorber comprises a metallic absorber panel (2, 2', 2'') with intrinsic stiffness, which is held together directly on the edge bond (3, 3', 3''), and that arranged between the absorber panel (2, 2', 2'') and a building wall (12) is an intermediate airspace (13).

2. Device according to Claim 1, **characterised in that** the absorber panel (2, 2', 2'') comprises an absorber sheet having a light-absorbing coating on the side towards the intermediate space.

3. Device according to Claim 1 or 2, **characterised in that** arranged in front of the (first) glass pane (1', 1''), towards the outside, is a second glass plane (4', 4'') and that the first and second glass pane are held together via a second edge bond (5', 5'') using insulating glass technology.

4. Device according to Claim 3, **characterised in that** the intermediate space (6') between the first (1') and second (4') glass pane is filled with a noble gas.

5. Device according to Claim 4, **characterised in that** the first glass pane (1') is coated.

6. Device according to Claim 3, **characterised in that** the intermediate space (6'') between the first (1'') and second glass pane (4'') is filled with stacked-up horizontally arranged tubes (7'') made of glass or plastics.

7. Device according to Claim 6, **characterised in that**, apart from the tubes (7''), the intermediate space (6'') between the first (1'') and second glass pane (4'') has an air gap (8'').

8. Device according to Claim 6 or 7, **characterised in that** the tubes (7'') are circular or honeycomb-shaped in cross-section.

9. Device according to one of the previous claims, **characterised in that** the side of the absorber panel (2, 2', 2'') facing towards the building wall (12) has a layer for adjusting the heat transmission.

10. Device according to one of the previous claims, **characterised in that** the absorber panel (2, 2', 2''), the glass pane(s) (1, 1', 1''; 4', 4'') and the edge bond(s) (3, 3', 3''; 5', 5'') are held in a frame or on a rearward holding angle (11) and connected to the building wall (12) only via this frame or holding angle (11).

11. Device according to Claim 10, **characterised in that** it is tiltably held on the building wall (12).

12. Device according to one of the previous claims, **characterised in that** the absorber panel (2, 2', 2'') is provided with tubes that preferably have water flowing through them.

13. Device according to one of the previous claims, **characterised in that** the outer glass cover (1, 4', 4'') is provided with a prismatic pane or is replaced by such a pane.

14. Device according to one of the previous claims, **characterised in that** the absorber panel (2, 2', 2'') is provided on the rear side with heat insulation and the panel thus formed is utilised as a wall element (without a solid wall).

15. Device according to one of the previous claims, **characterised in that** a slatted blind or a roller blind is arranged between the absorber panel (2, 2', 2'') and the glass pane (1, 1', 1'').

## Revendications

1. Dispositif d'isolation thermique transparent (10) pour le chauffage solaire de bâtiments, avec une vitre en verre (1) et un absorbeur (2) disposé sur un matériau composite de bord (3) selon la technique d'isolation et sur un interstice rempli de gaz inerte à une certaine distance de celui-ci, **caractérisé en ce que** l'absorbeur est constitué d'une plaque absorbante métallique intérieure (2, 2', 2") ayant une rigidité propre qui est maintenue directement sur le matériau composite de bord (3, 3', 3") et **en ce qu'**une couche d'air (13) est placée entre la plaque absorbante (2, 2', 2") et un mur du bâtiment (12).

2. Dispositif selon la revendication 1, **caractérisé en ce que** la plaque absorbante (2, 2', 2") est constituée d'une tôle absorbante revêtue sur la face' absorbant la lumière vers l'interstice.

3. Dispositif selon la revendication 1 ou 2, **caractérisé en ce qu'**une seconde vitre de verre (4', 4") est disposée devant la (première) vitre en verre (1', 1"), vers l'extérieur, et **en ce que** la première et la second vitre en verre sont maintenues ensemble par sur un second matériau composite de bord (5', 5") selon la technique d'isolation.

4. Dispositif selon la revendication 3, **caractérisé en ce que** l'interstice (6') entre la première (1') et la second (4') vitre en verre est rempli avec un gaz inerte.

5. Dispositif selon la revendication 4, **caractérisé en ce que** la première vitre en verre (1') est revêtue.

6. Dispositif selon la revendication 3, **caractérisé en ce que** l'interstice (6") entre la première (1") et la second (4") vitre en verre est rempli avec des tubes empilés horizontalement en verre ou en matière plastique.

7. Dispositif selon la revendication 6, **caractérisé en ce que** l'interstice (6") entre la première (1") et la second (4") vitre en verre comporte une fente d'air (8") à côté des tubes.

8. Dispositif selon la revendication 6 ou 7, **caractérisé en ce que** les tubes ont une section transversale de forme circulaire ou alvéolaire.

9. Dispositif selon l'une quelconque des revendications précédentes, **caractérisé en ce que** la face de la plaque absorbante (2, 2', 2") dirigée contre le mur du bâtiment (12) comporte une couche pour le réglage du transfert de chaleur.

10. Dispositif selon l'une quelconque des revendications précédentes, **caractérisé en ce que** la plaque absorbante (2, 2', 2"), la(les) vitre(s) en verre (1, 1', 1"; 4', 4") et le ou les matériau(x) composite(s) de bord (3, 3', 3"; 5', 5") sont maintenus dans un cadre ou une sur équerre de retenue à l'arrière (11) et sont reliés avec le mur du bâtiment (12) uniquement à laide de ce cadre ou de cette équerre (11).

11. Dispositif selon la revendication 10, **caractérisé en ce qu'**elle est maintenue sur le mur du bâtiment (12) de manière rabattable.

12. Dispositif selon l'une quelconque des revendications précédentes, **caractérisé en ce que** la plaque absorbante (2, 2', 2") est munie de tubes, de préférence, parcourus par de l'eau.

13. Dispositif selon l'une quelconque des revendications précédentes, **caractérisé en ce que** la couverture extérieure en verre (1, 4', 4") est munie d'une vitre à prismes ou est remplacée par une telle vitre.

14. Dispositif selon l'une quelconque des revendications précédentes, **caractérisé en ce que** la plaque absorbante (2, 2', 2"), est munie à l'arrière d'une isolation thermique et **en ce que** le panneau ainsi formé est utilisé comme élément de mur (sans mur plein).

15. Dispositif selon l'une quelconque des revendications précédentes, **caractérisé en ce qu'**un store à lamelles ou un store est installé entre la plaque absorbante (2, 2', 2") et la vitre en verre (1, 1', 1"),
